# EUROPEAN PATENT APPLICATION

(11) **EP 4 279 053 A1**
(43) Date of publication of application: **22.11.2023**
(21) Application number: 22182377.6
(22) Date of filing: 30.06.2022
(51) Int. Cl.: A61H 37/00

(54) **FASCIA GUN BRACKET**

(30) Priority: 21.05.2022 CN 202221263969 U
(71) Applicant: Knebusch, Finn Mohawk, 22926 Ahrensburg (DE); Jinhua Twin-Star Tools Co., Ltd, Jindong District Jinhua City Zhejiang (CN)
(72) Inventor: Knebusch, Finn Mohawk, 22926 Ahrensburg (DE)
(74) Representative: Michalski Hüttermann & Partner Patentanwälte mbB

(57) **Abstract**

The utility model discloses a fascia gun bracket. The fascia gun includes a gun body and a handle. The bracket of the fascia gun includes: a suction cup, which comes with a mounting seat; a back plate, which is arranged along the radial direction of the suction cup and whose surface shape fits with the handle; a hinged plug, one end of which is connected with the mounting seat, and the other end is hinged with the upper part of the back plate through hinged shaft, also the two sides of the hinged plug are provided each with a locking piece, and the locking piece is provided with a latch parallel to the hinged shaft, and the latch can be locked or unlocked by changing the distance between the locking pieces on the two sides; and a strap, which fastens the handle to the back plate. The utility model of fascia gun bracket can be adsorbed on the surface of a wall through the suction cup, with the fascia gun fixed on the back plate through the strap, and the fascia gun does not need to be handheld while being used. The back plate of the fascia gun bracket is connected by the hinged plug, and the hinged plug is provided with locking pieces on both sides and a latch parallel to the hinge shaft. While using the fascia gun, lock in the latch so that the back plate is firmly attached to the suction cup, thus ensuring the safety of the fascia gun.

## Description

### Technical field

The utility model relates to the technical field of the fascia gun, in particular to a fascia gun bracket.

### Background technology

The fascia gun, also known as the deep myofascial impactor, is a soft tissue rehabilitation tool that relaxes the soft tissues of the body through high frequency impact. The fascia gun uses its special high-speed motor to drive the "gun head", which generates high-frequency vibration to act on the underlying muscles to reduce local tissue tension, relieve pain, and promote blood circulation, etc.

In prior art, when a fascia gun is in use, it is handheld in place to massage the corresponding part of the body, which causes many practical inconvenience. On the one hand, the fascia gun needs to be held by hand at all times during use, which not only increases the burden of the user, but also easily leads to problems such as displacement of the action point; on the other hand, the user cannot use it to massage the back or other difficult-to-reach body parts on its own.

The information disclosed in this Background Technology section is only for enhancement of understanding of the general background of the utility model and should not be taken as an acknowledgement or implication that such information forms any prior art already known to a person of ordinary skill in the art.

### Utility model content

One of the objectives of the present utility model is to provide a fascia gun bracket, thereby improving the convenience and flexibility for the use of the fascia gun.

Another objective of the present utility model is to provide a fascia gun bracket, thereby improving the safety for the use of the fascia gun.

In order to achieve the above purpose, the utility model provides a fascia gun bracket. The fascia gun includes a gun body and a handle, and the fascia gun bracket includes: a suction cup, which is provided with a mounting seat; a back plate, which is set along the radial direction of the suction cup, the surface shape of which is adapted to the handle; a hinged plug, one end of which is connected with the mounting seat, and the other end is hinged with the upper part of the back plate through the hinged shaft, and both sides of the hinged plug are each provided with a locking piece, each again provided with a latch parallel to the hinge shaft, the distance between which can be changed to the locking and unlocking of the latch; and a strap, which fastens the handle onto the back plate.

Further, in the above technical solution, when the latch is locked, the back plate is in a locked state; when the latch is unlocked, the back plate can be rotated around the hinge shaft to turn the back plate open or buckled in in relation to the suction cup.

Further, in the above technical solution, one end of the hinge shaft is provided with a knob, which can be rotated to change the distance between the locking pieces on the two sides.

Further, in the above-mentioned technical solution, a spring member is coaxially sleeved on the hinge shaft, and the spring member is set abutted with the lock pieces on the two sides. When the knob is turned tight, the distance between the lock pieces on the two sides would be reduced, compressing the spring pieces and thus locking in the latch; while when the knob is turned loose, the spring member would push apart the locking pieces on the two sides, unlocking the latch.

Further, in the above technical solution, one end of the hinged plug is provided with a guide portion, and the mounting seat is provided with a groove that matches with said guide portion.

Further, in the above technical solution, the back plate is provided with a support portion, and the bottom end of the support portion is provided with a shock-absorbing pad, which, when in the buckled state, is set abutted with the suction cup.

Further, in the above technical solution, there are two such supporting portions, which are respectively arranged on the two sides of the back plate; the supporting portions are trapezoidal hollow structures; and the shock-absorbing pad is made of TPE material.

Further, in the above technical solution, the suction cup is provided with a vacuuming assembly.

Further, in the above technical solution, the surface of the back plate is provided with a non-slip pad; the bottom of the back plate is provided with a baffle.

Further, in the above technical solution, the strap forms a limit for the gun body.

Compared with the prior art, the present utility model has one or more of the following beneficial effects:
1. The fascia gun bracket of the present utility model can be adsorbed on the surface of ceramic tile wall, etc., through the suction cup, and then the fascia gun is fixed on the back plate by the strap. When in use, the fascia gun needs not to be held by hand, instead only press the part to be massaged against the head of the fascia gun to finish the massage. The installation position of the fascia gun is flexible and simple, and the user can even use the fascia gun all by itself to massage body parts hard to reach, such as the back.
2. The back plate of the fascia gun bracket of the present utility model is connected through a hinged plug, the two sides of which are each provided with a locking piece, as well as a latch parallel to the hinge shaft. When the fascia gun is in use, insert the latch to lock the back plate with the suction cup so as to improve the safety of the fascia gun.
3. When the locking pieces of the hinged plug are unlocked, the back plate can be switched between the open state and the buckled-in state. When it is in the open state, it is convenient for the user to perform the vacuuming operation of the suction cup. When it is in the buckled state, the fascia gun can be fixed, ensuring greater stability and positioning accuracy.
4. The connection between the hinged plug and the mounting seat is more convenient and stable through the matching of the guide portion and the groove.
5. Through the structural design of the shock-absorbing pad of the support portion, when in the buckled state, the shock-absorbing pad is pressed against the suction cup, which plays a role of auxiliary fixing to avoid shaking and displacement during use; at the same time, it can absorb shock ensuring that the vibration generated by the fascia gun will not affect the firmness of the suction cup.
6. Both the strap and the baffle can limit the position of the fascia gun to prevent the fascia gun from falling off.

The above description is only an overview of the technical solution of the present utility model. In order to better understand the technical means of the present utility model and to be able to implement it according to the contents of the specification, and at the same time to make the purposes, above listed or otherwise, technical features and strength of the present utility model more accessible, one or more preferred embodiments of it are listed below and described in detail with reference to the accompanying drawings.

### Description of drawings

Figure 1 is a schematic of the three-dimensional structure of an embodiment of fascia gun bracket according to the present utility model.
Figure 2 is a side view schematic of the structure of an embodiment of fascia gun bracket according to the present utility model.
Figure 3 is a schematic of the structure of an embodiment of fascia gun bracket according to the present utility model viewed from another side.
Figure 4 is a top-down schematic of the structure of an embodiment of fascia gun bracket according to the present utility model.
Figure 5 is a rear view schematic of the structure of an embodiment of fascia gun bracket according to the present utility model.
Figure 6 is a side view schematic of the structure of an embodiment of fascia gun bracket according to the present utility model, wherein the suction cup structure is not shown.
Figure 7 is a three-dimensional schematic of an embodiment of fascia gun bracket according to the present utility model, wherein the suction cup structure is hidden, with the knob and the locking piece on one side shown in an exploded view along the direction of the hinge axis.

### Description of major marks in the drawings:

10-suction cup, 11-mounting seat, 12- groove, 13-vacuuming assembly, 20-back plate, 22-non-slip pad, 23- baffle plate, 24- support portion, 241-shock-absorbing pad, 30- hinged plug , 31- hinged shaft, 32- knob, 33- locking piece, 331- latch, 34- guide portion, 35- spring member, 40- strap.

### Specific implementation mode

A specific embodiments of the present invention will be described in detail below with reference to the accompanying drawings, but it should be understood that the protection scope of the present utility is not limited by the specific embodiment.

Unless expressly stated otherwise, throughout the specification and claims, the term "comprising" or its conjugations such as "composing of" or "comprised of" and the like will be understood to include said member or component, but not excluding other member or component.

In the current text, for convenience of description, spatially relative terms, such as "below", "beneath", "under", "above", "on top of", "over", etc., may be used to describe the relationship of one member or feature to another member or feature in the drawings. It is to be understood that spatially relative terms are intended to encompass different orientations of items in use or in operation in addition to the orientation depicted in the drawings. For example, if an item in the drawing is turned over, the member or feature described as "below" or "beneath" that item would then be positioned "above" it. Thus, the exemplary term "below" can encompass both the two orientations of being below and being above. An item may also have other orientations (i.e., rotated 90 degrees or otherwise) and the spatially relative terms used herein should be interpreted accordingly.

In the current text, the terms "first", "second" and the like are used to distinguish two or multiple members or parts, and are not used to limit a specific position or relative relationship. In other words, in some embodiments, the terms "first," "second," etc. are interchangeable with each other.

The current utility model is applicable to a general fascia gun, which generally includes a gun body and a handle. The structure of the fascia gun can be seen by reference to the prior art, which is not limited by the present utility model.

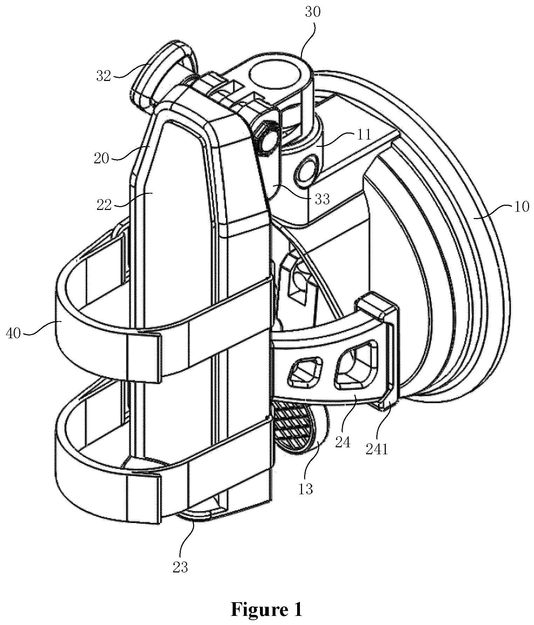

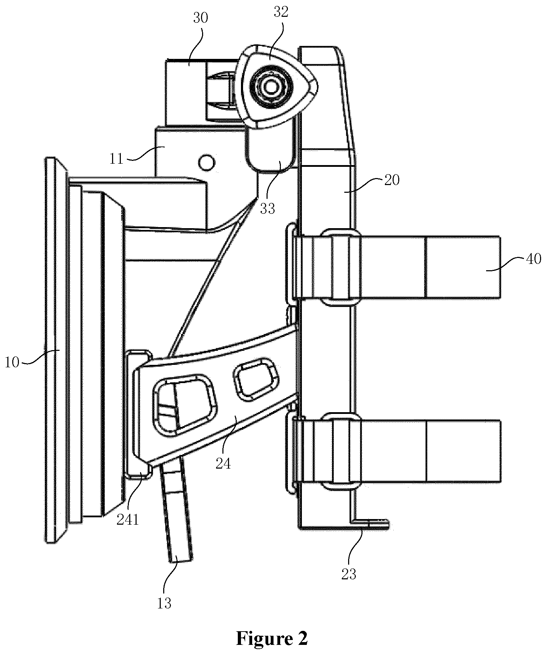

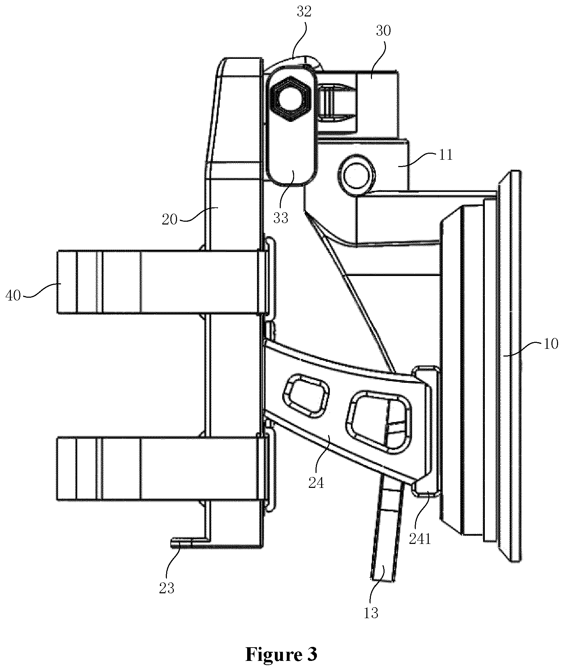

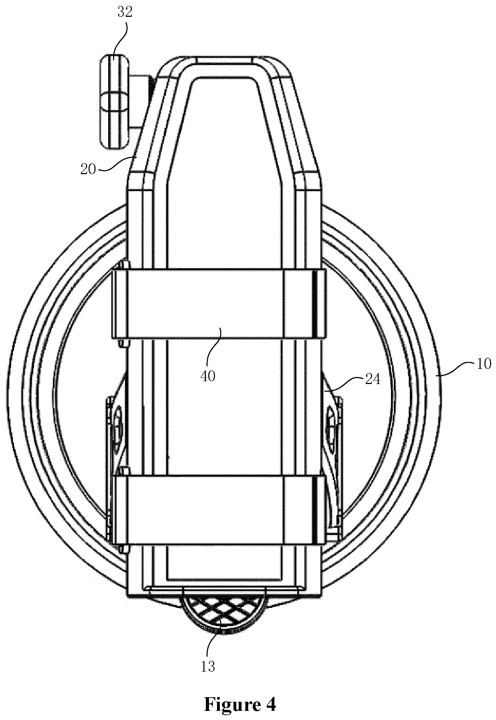

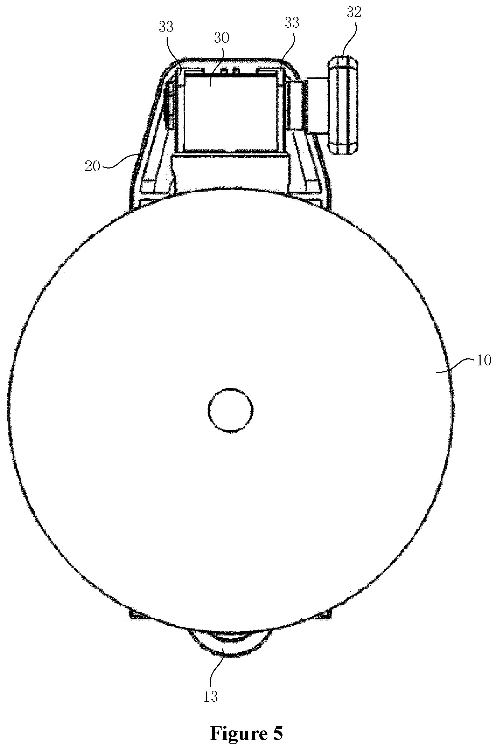

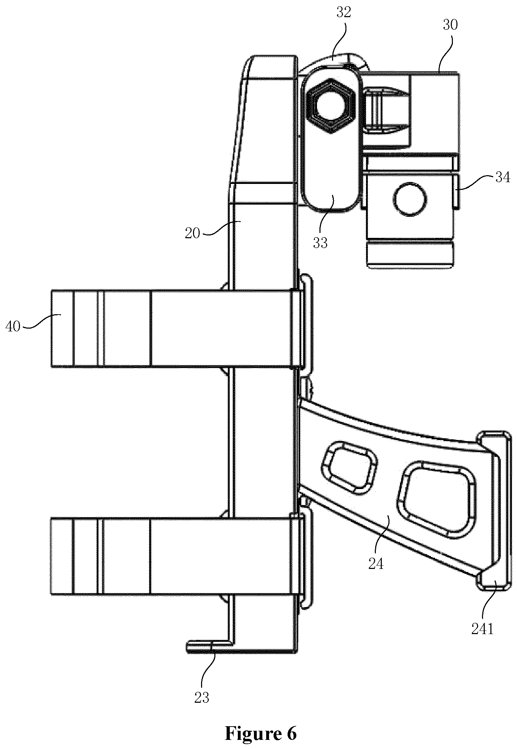

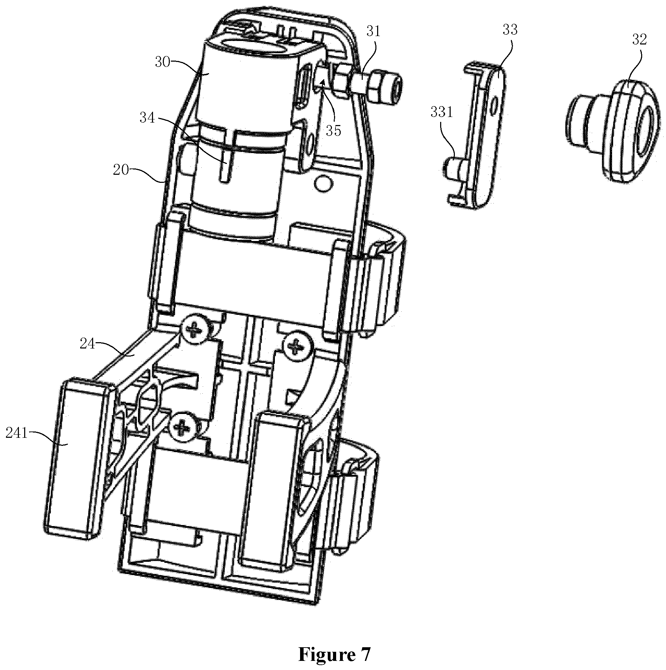

As shown in figures 1 to 7, the fascia gun bracket according to the specific embodiment of the present utility model includes a suction cup 10, a back plate 20, a hinged plug 30 and a strap 40. The suction cup 10 is provided with a mounting seat 11, the mounting seat 11 may be a short tube structure, and the back plate 20 is arranged along the radial direction of the suction cup (see Figure 4). The surface shape of the back plate 20 is adapted to the handle of the fascia gun, and the strap 40 can fasten the handle onto the back plate 20. Exemplarily, the handle of the fascia gun can be cylindrical, and the surface of the back plate 20 is arc-shaped, which can fit with the handle. One end of the hinged plug 30 is detachably connected with the mounting seat 11, and the other end is hinged with the upper part of the back plate 20 through a hinged shaft 31. Both sides of the hinged plug 30 are provided each with a locking piece 33, and the locking pieces 33 are provided with a latch 331 parallel to the hinge shaft 31, which can be locked or unlocked by changing the distance between the locking pieces 33 on the two sides.

Further, in one or more exemplary embodiments of the present utility model, when the latch 331 is locked in, the back plate 20 is in a locked state; when the latch 331 is unlocked, the back plate 20 can be rotated around the hinge shaft 31 to switch between the open state and the buckled-in state of the back plate 20 in relation to the suction cup 10. When the back plate 20 is in an open state relative to the suction cup 10, it is convenient for the installation and vacuuming operation of the suction cup 10; when the back plate 20 is in a buckled-in state relative to the suction cup 10, the fascia gun can be installed and used.

Further, in one or more exemplary embodiments of the present utility model, one end of the hinge shaft 31 is provided with a knob 32, and rotating the knob 32 could change the distance between the locking pieces 33 on the two sides.

Further, in one or more exemplary embodiments of the present utility model, a spring member 35 is coaxially sleeved on the hinge shaft 31, and the spring member 35 is set abutted with the locking pieces 33 on the two sides. When the knob 32 is turned tight, the distance between the locking pieces 33 on the two sides is reduced, compressing the spring member 35 and locking in the latch 331; and when the knob 32 is turned loose, the spring member 35 would push the locking pieces 33 on the two sides apart, thus unlocking the latch 331.

Further, in one or more exemplary embodiments of the present utility model, one end of the hinged plug 30 is inserted into the mounting seat 11 and is detachably connected to it, for example, by way of a pin, which is not limited by the case shown in the present utility model. Exemplarily, one end of the hinged plug 30 is provided with a guide portion 34, and the mounting base 11 is provided with a groove (not shown in the figure) matching the guide portion 34. The guide portion 34 can be, for example, a guide bar, which is not limited by the present utility model.

Further, in one or more exemplary embodiments of the present utility model, the back plate 20 is provided with a support portion 24, and the bottom end of the support portion 24 is provided with a shock-absorbing pad 241. When in the buckled state, the shock-absorbing pad 241 is set abutted with the suction cups 10. The shock-absorbing pad 241 can be made of TPE material, so as to achieve dual functions of fixing and damping. When in the buckled-in state, the back plate 20 is connected to the suction cup 10 at the top through the hinge plug 30, and the middle and lower parts of the back plate 20 are pressed against the suction cup 10 through the shock-absorbing pad 241, so as to avoid displacement of the back plate 20 which may interfere with the use of the fascia gun.

Further, in one or more exemplary embodiments of the present utility model, there may be two support portions 24, which are respectively provided on the two sides of the back plate 20. It should be understood that the number of the support portions is not limited thereto. Further, in one or more exemplary embodiments of the present utility model, the support portion 24 may be a trapezoidal hollow structure, which is both practical and appealing in appearance while ensuring more stable support and saving material usage. It should be understood that the present utility model does not limit it in any way, and the support portion can be set according to practical need or to fit the style of the suction cup.

Further, in one or more exemplary embodiments of the present utility model, the suction cup 10 is a vacuum suction cup, which can be fixed onto the surface of ceramic tile wall, etc., through the vacuuming assembly 13. It should be understood that the vacuuming method and the structure of the suction cup can be any appropriate prior art, which should not be limited by the present utility model.

Further, in one or more exemplary embodiments of the present utility model, the surface of the back plate 20 may be provided with a non-slip pad 22 to prevent the fascia gun from being slippery, while keeping the vibration during the operation of the fascia gun from affecting the firmness of the suction cup. Exemplarily, the non-slip pad 22 may be made of TPR material. Further, in one or more exemplary embodiments of the present utility model, the bottom of the back plate 20 may be provided with a baffle plate 23 to support the bottom of the fascia gun.

Further, in one or more exemplary embodiments of the present utility model, the strap 40 can be a magic tape strap, which is convenient to adjust the tightness when fixing the handle, and the strap 40 can limit the gun body.

The foregoing descriptions of some specific exemplary embodiments of the present utility model have been presented for purposes of illustration and description. These descriptions are not intended to limit the utility model to the precise form disclosed, and obviously many changes and variations are possible in light of the above descriptions. The exemplary embodiments were chosen and described for the purpose of explaining certain principles of the utility model and its practical applications, to thereby enable those skilled in the art to make and utilize the various exemplary embodiments of the utility model and effect the various different choices and changes. Any simple modifications, equivalent changes or modifications made to the above exemplary embodiments should fall within the protection scope of the present utility model.

## Claims

1. A fascia gun bracket, where, the fascia gun comprises a gun body and a handle, wherein the fascia gun bracket comprises:
a suction cup, which is provided with a mounting seat;
a back plate, which is arranged along the radial direction of the suction cup, and the surface shape of the back plate is adapted to the handle;
a hinged plug, one end of which is connected with the mounting seat, and the other end is hinged with the upper part of the back plate through a hinged shaft; the two sides of said hinged plug are provided each with a locking piece, and the locking pieces are provided with a latch parallel to said hinged shaft, which can be locked or unlocked by changing the distance between the locking pieces on both sides; and
a strap that secures said handle to said back plate.

2. The fascia gun bracket according to claim 1, wherein, when said latch is locked in, said back plate is in a locked state; and when said latch is unlocked, said back plate would rotate around said hinge shaft so that said plate can be opened or locked in relation to said suction cup.

3. The fascia gun bracket according to claim 2, wherein, one end of said hinge shaft is provided with a knob, turning which the distance between the locking pieces on the two sides can be adjusted.

4. The fascia gun bracket according to claim 3, wherein, a spring member is coaxially sleeved on said hinge shaft, and said spring member is set abutted with the locking pieces on the two sides, and when said knob is turned tight, the distance between the locking pieces on the two sides is reduced, compressing the spring piece and locking in the latch; when said knob is turned loose, the spring piece would push the locking pieces on the two sides apart, unlocking said latch.

5. The fascia gun bracket according to claim 2, wherein one end of said hinged plug is provided with a guide portion, and said mounting seat is provided with a groove matched with said guide portion.

6. The fascia gun bracket according to claim 2, wherein, said back plate is provided with a support portion, the bottom end of said support portion is provided with a shock-absorbing pad, and when it is in the buckled-in state, said shock-absorbing pad is set abutted with the suction cup.

7. The fascia gun bracket according to claim 6, wherein there are two of said support parts, which are respectively arranged on either side of the back plate; said support parts are trapezoidal hollow structures; and said shock-absorbing pad is made of TPE material.

8. The fascia gun bracket according to claim 2, wherein said suction cup is provided with a vacuum member.

9. The fascia gun bracket according to claim 1, wherein, the surface of said back plate is provided with a non-slip pad; and the bottom of said back plate is provided with a baffle plate.

10. The fascia gun bracket according to claim 1, wherein, said strap forms a limit for said gun body.
